# EUROPEAN PATENT APPLICATION

(11) **EP 3 865 939 A1**
(43) Date of publication of application: **18.08.2021**
(21) Application number: 20203480.7
(22) Date of filing: 23.10.2020
(51) Int. Cl.: G03B 17/56, F16M 13/04

(54) **MAGNETIC BRACKET FOR CAMERA**

(30) Priority: 12.02.2020 DK PA202000171
(71) Applicant: Joensson, Flemming Andersen Overgaard, 7490 Aulum (DK)
(72) Inventor: Joensson, Flemming Andersen Overgaard, 7490 Aulum (DK)
(74) Representative: Sun, Yiming

(57) **Abstract**

A camera mounting assembly for holding a camera in a position, is disclosed. The camera mounting assembly comprises a first member and a second member. The first member is configured to enable a user to securely fasten to an object using one or more fasteners. The first member comprises a protrusion with a pair of magnets and a pair of latching tabs. The second member comprises a pair of magnets and a pair of mating slots. The second member is configured to magnetically and detachably fastening to the first member by mating the pair of latching tabs to the pair of mating slots. The second member is configured to securely hold the camera in the position for capturing surrounding images and videos using at least one fastener.

## Description

### CROSS REFERENCE TO RELATED APPLICATION

The present application claims the benefit of Danish Patent Application No. PA202000171 filed February 12, 2020, the contents of which is hereby incorporated by reference

### BACKGROUND OF THE INNOVATION

### A. Technical field

The invention disclosed herein generally relates to a camera holder. More particularly, the present invention relates to a camera holder for mounting a camera on an object, for example, a helmet.

### B. Description of related art

Conventionally, several types of cameras are available for various purposes such as capturing photos, recording videos, security surveillance or other media related applications. Recently, digital camera technology has continued to advance, for providing higher quality photos and video streams with richer colors and frame rates. The digital camera uses higher definition digital sensors to capture a video with ease and clarity.

A compact, rugged and water-proof portable cameras are designed to use in various activities, such as sports. The cameras associated with outdoor sports are often attached to helmets, surfboards or handlebars, which are an integral part of many sports such as base jumping, parachuting, wingsuit flying, skiing, etc. Mounting these cameras on various places such as helmets, motorcycles, or other equipment for capturing "on board" footage of a user's activities has become a trend in recent years. In general, the camera is mounted on the top of the helmet. Sometimes several cameras are used to capture specific perspectives, such as a first camera mounted on the helmet to record the perspective of the user and a second camera mounted on the other equipment in the user environment, for example, a board, wing, handlebar or wrist to record their reactions.

Based on the intended use, the cameras are mounted using some type of hardware units such as tripod and mounting brackets. Tripods are heavy and consume more time for the setup. Also, tripods occupy more space. The bracket is first attached to the object, for example, helmet used while riding a bicycle, a motorcycle, a horse, etc. using adhesives, suction cups, or other methods. The camera is then attached to the bracket. However, it could reduce the stability of the helmet by locating a relatively large mass from the center of rotation of the helmet. Also, the helmet is intended to maintain its structural integrity. Besides the camera could also be mounted using two elastic bands. However, it is difficult to move and not possible to move them around without a lot of work. Some type of camera holders enables the users to hold them for recording the activities, which is inconvenient to users. Also, the assembling and detaching of camera holders on equipment are very inconvenient. Further, the camera holders could damage the camera if it is not assembled properly.

A prior art, TWM574261 of *XIE ZHE MING,* discloses a Magnetic quick release seat of sports camera. Another prior art, US2013221189 of *KUBIN DMITRY,* discloses device provides a quick release holding capability. The holder apparatus includes a top plate attachment for the portable handheld-size device and a base plate mounted on a variety of surfaces via means that include but not limited to: brackets, screws, rivets, etc. Asymmetrical turn lock mechanism in conjunction with magnetic locks prevents accidental release. It also has additional feature where the portable device can be turned 360-degrees in increments of 90-degree angles activating magnetic locks in each 90-degree position. However, above-mentioned prior arts fail to disclose a camera mounting assembly in a helmet with a first member comprising mounting flanges configured to fasten with the helmet and a second member with loops mounted at one end of a vertical column to securely hold the camera.

In the light of above-mentioned problems, it is desirable to provide an improved and efficient camera holder that allows mounting a recording device such as a camera, which could be easily removed and moved around. Also, there is a need for a solution that allows complete freedom of movement while accurately tracking the line of sight of the user.

### SUMMARY OF THE INNOVATION

The present invention discloses a camera holder. More particularly, the present invention relates to a camera mounting assembly or a camera holder for mounting a camera on an object, for example, a helmet.

In one embodiment, the camera mounting assembly comprises a first member and a second member. In one embodiment, the first member is configured to enable a user to securely fasten to an object. In one embodiment, the first member comprises a protrusion with a pair of magnets and a pair of latching tabs. In one embodiment, the first member further comprises one or more mounting flanges configured to fasten with the object. In one embodiment, each mounting flange has a hole configured to accept a mounting pin to fasten the first member to the object. In one embodiment, the object is at least anyone of a helmet, a headgear, and a head strap.

In one embodiment, the second member comprises a pair of magnets and a pair of mating slots for magnetically and detachably fastening to the first member by mating the pair of latching tabs to the pair of mating slots, wherein the second member is configured to securely hold the camera in the position for capturing surrounding images and videos using at least one fastener. In one embodiment, the second member further comprises one or more loops mounted at one end of a vertical column. In one embodiment, the one or more loops are configured to securely hold the camera using at least one fastener. In one embodiment, the fastener is a thumb knob. In some embodiments, the fastener could be threaded screws, bolts, and nuts.

In one embodiment, the second member comprises a shape to enable the user to magnetically and detachably fastening to the first member. In one embodiment, the second member is removed from the first member by applying a force exceeding the magnetic strength of the pair of magnets. In one embodiment, the first member and the second member are made from any one of a plastic, steel, or other suitable durable material.

In one embodiment, the camera mounting assembly allows an automatic or manual cutaway system to remove the second member with the camera from the first member. In one embodiment, the camera mounting assembly could be mounted on any one of an electric scooter, motorbike, parachute, snowboard, bicycle, rollerblade, skateboard, and other sports equipment. In one embodiment, the camera mounting assembly is manufactured from any one of a technology includes 3D printing, plastic molding, or CNC milling.

Other objects, features and advantages of the present innovation will become apparent from the following detailed description. It should be understood, however, that the detailed description and the specific examples, while indicating specific embodiments of the innovation, are given by way of illustration only, since various changes and modifications within the spirit and scope of the innovation will become apparent to those skilled in the art from this detailed description.

### BRIEF DESCRIPTION OF DRAWINGS

The foregoing summary, as well as the following detailed description of the innovation, is better understood when read in conjunction with the appended drawings. For the purpose of illustrating the innovation, exemplary constructions of the innovation are shown in the drawings. However, the innovation is not limited to the specific methods and structures disclosed herein. The description of a method step or a structure referenced by a numeral in a drawing is applicable to the description of that method step or structure shown by that same numeral in any subsequent drawing herein.
**FIG. 1** exemplarily illustrates a camera mounting assembly with a camera mounted on an object, according to an embodiment of the present invention.
**FIG. 2** exemplarily illustrates a mounting plate, according to one embodiment of the present invention.
**FIG. 3** exemplarily illustrates a mounting bracket, according to one embodiment of the present invention.
**FIG. 4** exemplarily illustrates a front view of the mounting bracket with the camera to mount on the mounting plate, according to one embodiment of the present invention.
**FIG. 5** exemplarily illustrates a side view of the mounting bracket with the camera to mount on the mounting plate, according to one embodiment of the present invention.

### DETAILED DESCRIPTION OF EMBODIMENTS

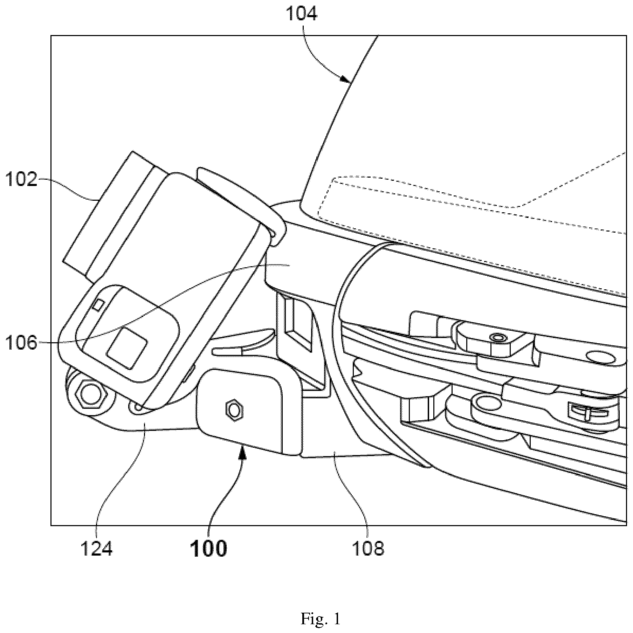

A description of embodiments of the present innovation will now be given with reference to the Figures. It is expected that the present innovation may be embodied in other specific forms without departing from its spirit or essential characteristics. The described embodiments are to be considered in all respects only as illustrative and not restrictive. Referring to **FIG. 1****,** a perspective view of a camera mounting assembly or camera holder **100** with a camera **102** mounted on an object **104,** according to an embodiment of the present invention. In one embodiment, the camera mounting assembly **100** is secured at a front outer periphery of the object **104.** In one embodiment, the camera mounting assembly **100** is configured to hold the camera **102** in a place at a desired position. The camera **102** could be an action camera. In one embodiment, the camera mounting assembly **100** could be used anywhere to mount the camera **102.** In some embodiments, the camera mounting assembly **100** could be used to mount the camera **102** on the pole of electric scooters, bicycles, motorbikes, etc. In some embodiments, the camera mounting assembly **100** could be used in many outdoor activities such as parachuting, biking, skiing, waterskiing, paragliding, snowboarding, sledding, ice skating, bicycling, rollerblading, rock climbing, skateboarding, motorcycling, and other sports. In one embodiment, the camera mounting assembly **100** is mounted at a lower side **106** of the object **104.** In one embodiment, the object **104** is at least anyone of a helmet, a headgear, and a head strap. In one embodiment, the camera mounting assembly **100** comprises a first member **108** and a second member **124.**

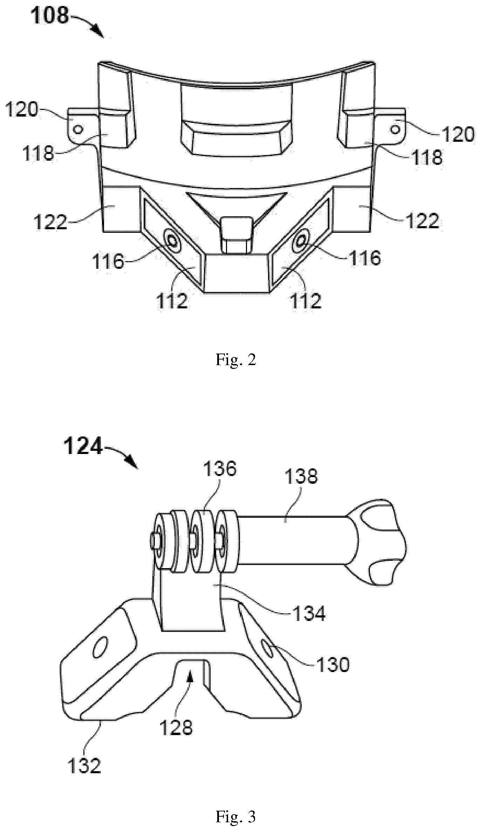

Referring to **FIG. 2****,** a perspective view of the first member **108,** according to one embodiment of the present invention. In one embodiment, the first member **108** is a mounting plate configured to enable a user to securely fasten to the object **104,** for example, helmet. In one embodiment, the first member **108** is molded from strong plastic. The first member **108** could also be made of steel or other suitable durable materials. In one embodiment, the first member **108** comprises a protrusion **110** having a pair of magnets **112** and a pair of latching tabs **114.**

In one embodiment, the pair of magnets **112** are mounted on an outer surface of the protrusion **110.** In one embodiment, the magnets **112** are permanent magnets. In one embodiment, the magnets **112** could be electromagnets, magnetically attractive materials or any other type of magnetic means. In one embodiment, the magnets **112** are mounted on the outer surface of the protrusion **110** using one or more fasteners **116.** The fasteners **116** could be threaded screws, bolts, and nuts. In one embodiment, the first member **108** further comprises one or more mounting flanges **118.** In one embodiment, the mounting flanges **118** are molded at the ends of the first member **108.** In one embodiment, each mounting flange **118** has a hole **120** configured to accept a mounting pin to fasten the first member **108** to the object **104,** for example, helmet. In one embodiment, the first member **108** further comprises a pair of extended portions **122.**

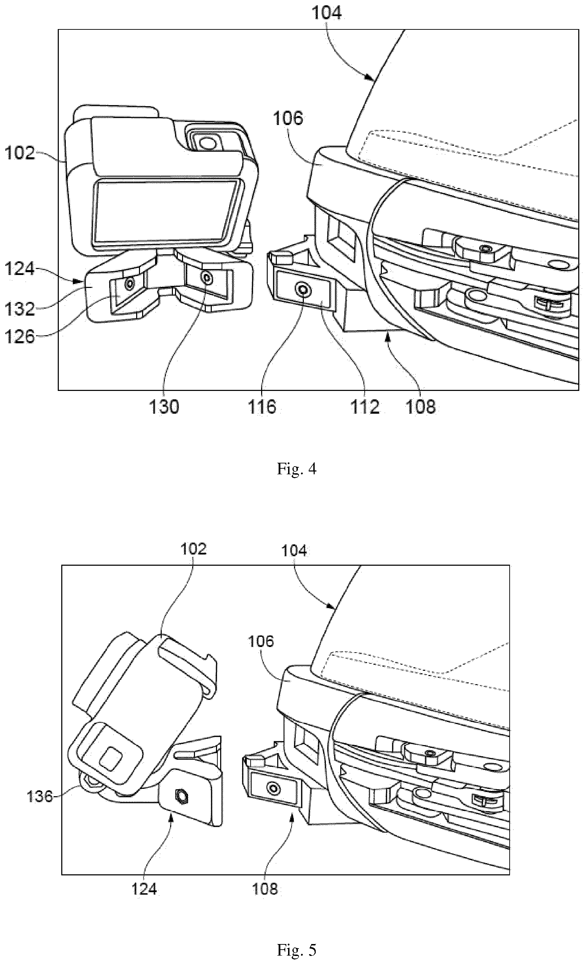

Referring to **FIG. 3****,** a perspective view of the second member **124,** according to one embodiment of the present invention. In one embodiment, the second member **124** is a mounting bracket configured to hold the camera **102** in a desired position. In one embodiment, the second member **124** is molded from strong plastic. The second member **124** could also be made of steel or other suitable durable materials. In one embodiment, the second member **124** comprises a pair of magnets **126** (as shown in FIG. **4**) and a pair of mating slots **128.**

In one embodiment, the pair of magnets **126** are mounted inside the second member **124.** In one embodiment, the magnets **126** are permanent magnets. In one embodiment, the magnets **126** could be electromagnets, magnetically attractive materials or any other type of magnetic means. In one embodiment, the magnets **126** are mounted inside second member **124** using one or more fasteners **130.** The fasteners **130** could be threaded screws, bolts, and nuts. In one embodiment, the pair of mating slots **128** is configured to receive the pair of latching tabs **114.** In one embodiment, the second member **124** is magnetically and detachably fastened to the first member **108** by snugly positioning the pair of latching tabs **114** into the mating slots **128.**

In one embodiment, the second member **124** comprises a shape to enable the user to magnetically and detachably fastening to the first member **108.** In one embodiment, the second member **124** comprises a pair of flat ends **132,** which rests on the pair of extended portions **122** while mounting the second member **124** on the first member **108.** In one embodiment, the second member **124** further comprises one or more loops **136** mounted at one end of a vertical column **134.** In one embodiment, the one or more loops **136** are configured to securely hold the camera **102** using at least one fastener **138.** In one embodiment, the fastener **138** is a thumb knob. In some embodiments, the fastener **138** could be threaded screws, bolts, and nuts.

Referring to **FIGs. 4** and **5****,** a front view and a side view of the second member **124** with camera **102** respectively, configured to mount on the first member **108** fastened at the lower side **106** of the object **102.** In one embodiment, the first member **108** is configured to enable the user to securely fasten to the object **104** using one or more fasteners. In one embodiment, the first member **108** comprises the protrusion **110** having the pair of magnets **112** and the pair of latching tabs **114.** In one embodiment, the second member **124** comprises the pair of magnets **126** and the pair of mating slots **128.** In one embodiment, the second member **124** is configured to magnetically and detachably fastened to the first member **108** by mating the pair of latching tabs **114** to the pair of mating slots **128** of the first member **108.** In one embodiment, the second member **124** is configured to securely hold the camera **102** in the position for capturing surrounding images and videos using the fastener **138.**

In one embodiment, the second member **124** is removed from the first member **108** by applying a force exceeding the magnetic strength of the pair of magnets **(112** and **126).** By adding the force that exceeds the magnitude of the magnets **(112** and **126),** the magnets **(112** and **126)** are released and the camera **102** automatically falls off. The second member **124** mounted with camera **102** could be used as a handheld recording device during activities such as parachute and or paraglides, in case the lines are wrapped into the second member **124** as well as the camera **102.**

In one embodiment, the function of the magnets **(112** and **126),** as well as the location/angle allows the magnets **(112** and **126)** to be released and moved over, on other mounting brackets having a suitable counterpart. In one embodiment, the camera mounting assembly **100** further comprises several parts that exactly fit together. The camera mounting assembly **100** is designed so that when assembled, they are mechanically locked, on all shafts, one shaft is locked with magnets. In another embodiment, the camera holding assembly **100** comprises a pair of wedges. The wedges are configured to remain the second member **124** in place when the second member **124** receives a shock laterally.

In one embodiment, the camera holding assembly **100** allows an automatic or manual cutaway system to remove the second member **124** with camera **102** from the first member **108.** It is easy to change the location, with the same camera **102,** as the members **(108** and **124)** fit together. It also allows if the camera holding assembly **100** or camera **102** are wrapped into something, for example, if the camera holding assembly **100** is used for parachuting, so the user could unwrap, or if the power exceeds the magnets strength, separates the members **(108** and **124)** so that it is no longer wrapped. In one embodiment, the camera holding assembly **100** could be mounted on any one of an electric scooter, motorbike, parachute, snowboard, bicycle, rollerblade, skateboard, and other sports equipment. In one embodiment, the camera holding assembly **100** could also be mounted to any of the moving objects to capture photos or record videos. In one embodiment, the simple design of the camera holding assembly **100** provides the magnetic connection, which is strong enough to be suitable during normal use to securely retain the camera **102** and to release the camera **102** in case of a crash or emergency to avoid injuries and damages. In some embodiments, the camera holding assembly **100** could be manufactured from any one of a technology includes 3D printing, plastic molding, or CNC milling.

Preferred embodiments of this innovation are described herein, including the best mode known to the inventors for carrying out the innovation. It should be understood that the illustrated embodiments are exemplary only and should not be taken as limiting the scope of the innovation.

The foregoing description comprise illustrative embodiments of the present innovation. Having thus described exemplary embodiments of the present innovation, it should be noted by those skilled in the art that the within disclosures are exemplary only, and that various other alternatives, adaptations, and modifications may be made within the scope of the present innovation. Merely listing or numbering the steps of a method in a certain order does not constitute any limitation on the order of the steps of that method. Many modifications and other embodiments of the innovation will come to mind to one skilled in the art to which this innovation pertains having the benefit of the teachings in the foregoing descriptions. Although specific terms may be employed herein, they are used only in generic and descriptive sense and not for purposes of limitation. Accordingly, the present innovation is not limited to the specific embodiments illustrated herein.

## Claims

1. A camera mounting assembly for holding a camera in a position, comprising,
a first member having a pair of latching tabs, configured to enable a user to securely fasten said first member to an object using one or more fasteners, and a second member having a pair of magnets and a pair of mating slots, wherein the second member further comprises one or more loops mounted at one end of a vertical column to securely hold the camera, wherein the second member is configured to securely hold the camera in the position for capturing surrounding images and videos using the fastener, **characterized by**:
the first member having a protrusion with a pair of magnets, and wherein the first member further comprises one or more mounting flanges configured to fasten with the object and said object is a helmet.

2. The camera mounting assembly of claim 1, wherein the second member comprises a shape to enable the user to detachably fastening to the first member.

3. The camera mounting assembly of claim 1, wherein the second member is removed from the first member by applying a force exceeding the magnetic strength of the pair of magnets.

4. The camera mounting assembly of claim 1, is mounted on anyone of an electric scooter, motorbike, parachute, snowboard, bicycle, rollerblade, skateboard, and other sports equipment.

5. The camera mounting assembly of claim 1, wherein the first member and the second member are made from any one of a plastic, steel, or other suitable durable material.

6. The camera mounting assembly of claim 1, is manufactured from any one of a technology includes 3D printing, plastic molding, or CNC milling.
